# EUROPEAN PATENT APPLICATION

(11) **EP 2 388 719 A1**
(43) Date of publication of application: **23.11.2011**
(21) Application number: 11162959.8
(22) Date of filing: 19.04.2011
(51) Int. Cl.: G06F 17/30, G06F 3/048

(54) **Display apparatus and control method for segmenting web pages**

(30) Priority: 19.05.2010 KR 20100046951; 23.06.2010 US 821649; 06.10.2010 KR 20100097265
(71) Applicant: SAMSUNG ELECTRONICS CO., LTD., Suwon-si Gyeonggi-do 442-742 (KR)
(72) Inventor: Choi, Sung-wook, Gyeonggi-do (KR); Suh, Kyung-joo, Seoul (KR); Kim, Yong-deok, Gyeonggi-do (KR); Lee, Hye-jeong, Seoul (KR)
(74) Representative: Fearnside, Andrew Simon

(57) **Abstract**

A display apparatus for viewing a portion of a web page and a control method thereof is provided. The display apparatus divides the web page into at least a plurality of first blocks which may be individually displayed on the display apparatus so a user can more easily view the contents of the web page. The display apparatus may further divide at least one of the plurality of first blocks into a plurality of second blocks such that the size of the plurality of second blocks is less than a size of a screen of the display apparatus. The plurality of second blocks may also be formed to avoid dividing objects on the web page. The user may provide instructions to control the display apparatus to view one or more blocks corresponding to the desired portions of the web page.

## Description

### BACKGROUND

### Field

Apparatuses and methods consistent with the exemplary embodiments relate generally to a display apparatus and a control method thereof, and more particularly, to a display apparatus having a web browsing function, and a control method thereof.

### Description of the Related Art

A display apparatus, such as a television (TV), a smart phone, a mobile phone, or the like may include a network communication tool and a web browser to permit browsing a web page on the Internet.

However, unlike web browsing through a computer (PC) with a dedicated monitor, these types of display apparatuses may not show an entire web page with sufficient readability due to an improper viewing distance, a relative ratio of screen size to distance, or the like. Thus, the display apparatuses allow a user to read a part of a web page by browsing web pages using scale adjustment through enlargement/reduction of the web page and scrolling across the web page. However, the above conventional process for browsing web pages does not enable the user to quickly and conveniently view a desired part of the web page.

### SUMMARY

According to the present invention there is provided an apparatus and method as set forth in the appended claims. Other features of the invention will be apparent from the dependent claims, and the description which follows.

One or more exemplary embodiments provide a display apparatus which enables a user to conveniently and quickly browse a desired part of a web page, and a control method thereof.

The foregoing and/or other aspects may be achieved by providing a display apparatus including: an input unit which receives a web page; an image processor which processes the web page for display; a display unit which displays the processed web page ; a receiving unit which receives an instruction of a user for browsing the web page; and a controller which divides the web page into a plurality of first blocks to browse the web page by displaying at least one of the first blocks, the plurality of first blocks having a size greater than a predetermined reference size.

The controller may divide at least one of the plurality of first blocks into a plurality of second blocks.

The reference size may correspond to a size of a screen of the display unit.

The controller may uniformly divide the at least one first block into the plurality of second blocks.

The controller may determine a number of second blocks to divide the at least one first block into so that each of the second blocks has a similar size to the reference size.

The controller may divide at least one of the first blocks into a plurality of second blocks so that an object included in the at least one first block is not separated into two or more second blocks, but is completely included in one of the second blocks.

The controller may divide the at least one first block into the plurality of second blocks when at least one of a width and a length of the at least one first block is greater than the reference size.

The controller may divide the at least one first block into the plurality of second blocks based on a position in the first block where an image characteristic is continuous.

The image characteristic may include a color.

The controller may select a position to divide the at least one first block into a plurality of second blocks so that the plurality of second blocks are approximately uniform when there are a plurality of positions in the first block having the continuous image characteristic.

The controller may divide the web page into the plurality of first blocks using a hierarchical structure of the web page.

The controller may highlight a selected one block among the plurality of first blocks and the plurality of second blocks being browsed.

In another exemplary embodiment, a method of controlling a display apparatus includes: receiving a web page; dividing the web page into a plurality of first blocks to display the first blocks, the plurality of first blocks having a size greater than a predetermined reference size; receiving an instruction of a user for browsing the web page; and browsing the first blocks based on the instruction of the user.

The at least one of the plurality of first blocks may be divided into a plurality of second blocks.

The reference size may correspond to a size of a screen of the display apparatus.

The at least one first block may be uniformly divided plurality of second blocks.

The number of the divided second blocks to divide the at least one first block into may be determined so that each of the second blocks has a similar size to the reference size.

The at least one first block may be divided into a plurality of second blocks so that an object included in the first block is not separated into two or more second blocks, but is completely included in one of the second blocks.

The at least one first block may be divided into a plurality of second blocks when at least one of a width and a length of the at least one first block is greater than the reference size.

The at least one first block may be divided into a plurality of second blocks based on a position in the first block where an image characteristic is continuous.

The image characteristic may include a color.

The at least one first block may be uniformly divided into a plurality of second blocks when there are a plurality of positions in the first block having the continuous image characteristic.

The web page may be divided into the plurality of first blocks using a hierarchical structure of the web page.

A selected one block among the plurality of first blocks and the plurality of second blocks being browsed may be highlighted. In another exemplary embodiment, a method for displaying a web page on a portable display apparatus includes: dividing a web page into a plurality of regions, wherein the regions correspond to content on the web page; and displaying one of the plurality of regions on a display of the portable display apparatus.

A size of each of the regions corresponds to a size of the display.

One of the plurality of regions may be displayed based on a user input.

As described above, according to exemplary embodiments, a user may conveniently and quickly browse a desired part of a web page. The above and/or other aspects will be more apparent from the following detailed description of exemplary embodiments taken in conjunction with the accompanying drawings and the claims.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 illustrates a display apparatus according to an exemplary embodiment.
FIG. 2 is a block diagram illustrating a configuration of the display apparatus of FIG. 1, according to an exemplary embodiment.
FIGS. 3 and 4 illustrate an example of a web page displayed by the display apparatus shown in FIGS. 1 and 2, according to an exemplary embodiment.
FIGS. 5 to 7 illustrate examples of a web page divided by the display apparatus of FIGS. 1 and 2, according to an exemplary embodiment.
FIG. 8 is a flowchart illustrating a control method of the display apparatus of FIGS. 1 and 2, according to an exemplary embodiment.

### DETAILED DESCRIPTION OF EXEMPLARY EMBODIMENTS

Below, exemplary embodiments will be described in detail with reference to accompanying drawings so as to be easily understood by a person having ordinary knowledge in the art. The exemplary embodiments may be embodied in various forms without being limited to the exemplary embodiments set forth herein. Descriptions of well-known parts are omitted for clarity and conciseness, and like reference numerals refer to like elements throughout.

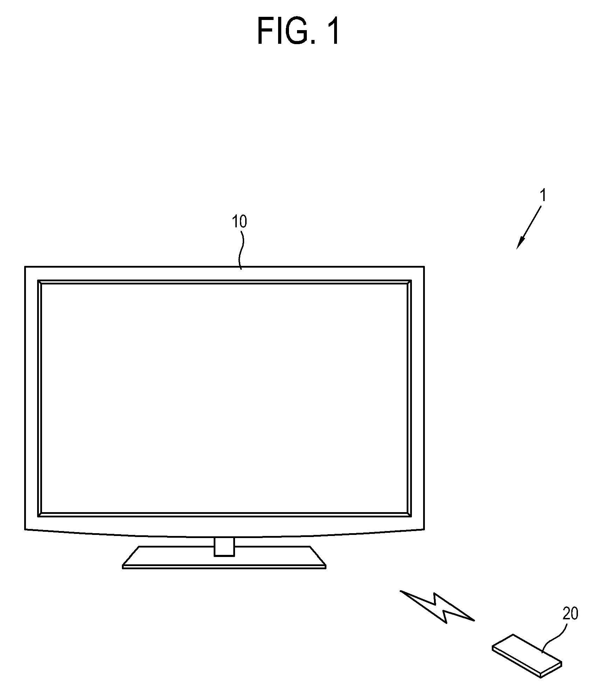

FIG. 1 illustrates a display apparatus 1 according to an exemplary embodiment. Although the display apparatus 1 shown in FIG. 1 is illustrated as a television (TV), the display apparatus of the present embodiment is not limited thereto, and may include devices having a web browsing function, such as a smart phone, a mobile phone, and the like. As shown in FIG. 1, the display apparatus 1 includes a display body 10 to display an image, and a remote control 20 to control the display body 10 based on user's manipulations. The remote control 20 transmits a remote control signal to the display body 10 based on user's manipulations, and the display body 10 receives a remote control signal from the remote control 20 and performs a corresponding operation.

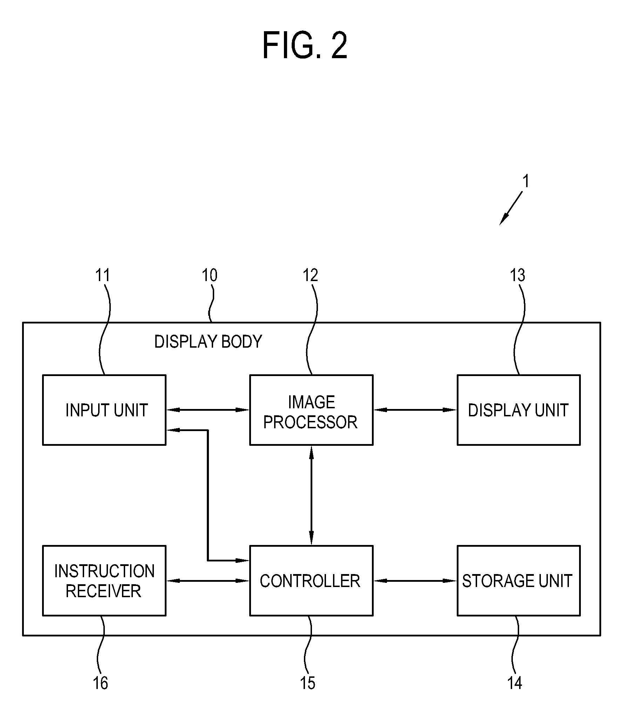

FIG. 2 is a block diagram illustrating a configuration of the display body 10 of FIG. 1. The display body 10 includes an input unit 11, an image processor 12, a display unit 13, a storage unit 14, a controller 15, and a receiving unit 16.

The input unit 11 may receive data of a web page on the Internet. The input unit 11 may be connected to a network (not shown) and communicate with the network in order to receive the data of the web page. Communication performed by the input unit 11 includes wire-based communication and wireless communication.

The input unit 11 may further receive an image signal including image contents. In addition to image contents, the image signal may also include audio content and/or data contents. An image signal received by the input unit 11 may include a broadcasting signal transmitted from a broadcasting station (not shown) and a signal input from an imaging apparatus (not shown). In the case of a broadcasting signal, the input signal 11 may selectively receive a broadcasting signal of any one of a plurality of channels. A broadcasting signal includes all types of broadcasting signals, for example, for air wave broadcasting, cable broadcasting, satellite broadcasting, and the like. The type of a broadcasting signal may include digital broadcasting or analog broadcasting. The input unit 11 performs signal processing to obtain image contents or the like from a received broadcasting signal. Signal processing includes tuning, analog-to-digital conversion, demodulation, digital-to-analog conversion, and the like.

In the case of an image signal input from an imaging apparatus, the input unit 11 may communicate with the imaging apparatus transmitting the image signal corresponding to characteristics of the input image signal. Communication includes wire-based communication, wireless communication, analog communication, and digital communication. A communication scheme includes all known types of communication schemes used to transmit image contents or the like. The imaging apparatus providing an image signal to the input unit 11 is not limited to a specific type, and may include a DVD player, a Blu-Ray disk (BD) player, a PC, a mobile phone, a smart phone, other TVs, or the like. The input unit 11 may perform signal processing to obtain image contents or the like from an input signal. Signal processing includes analog-to-digital conversion, digital-to-analog conversion, or the like.

Further, the input unit 11 may receives an image signal from a server (not shown) through a network or from a portable storage device (not shown), such as a universal serial bus (USB) storage device. In each instance, the input unit 11 may communicate with a counterpart device in a predetermined communication scheme to receive the image signal. In either instance, the input unit 11 may receive and process the image signal through control of the controller 15.

The image processor 12 performs image processing to display data of a web page (hereinafter, also referred to as a "web page") and image contents obtained from an image signal, the data and the image signal being received by the input unit 11. Image processing includes de-multiplexing, decoding, scaling, image quality adjustment, image quality enhancement, or the like. Further, the image processor 12 may process an image associated with a user interface (UI) menu to interface with the user. The image processor 12 may perform a process so that an image from the image contents and an image associated with the UI menu overlap at least part of each other in one screen, or are arranged side by side.

The display unit 13 displays a web page and an image processed by the image processor 12. A type of the display unit 13 displaying the web page and the image is not limited and includes all known types. For example, the display unit 13 may be a liquid crystal display (LCD), an organic light emitting display (OLED), a plasma display panel (PDP), a projector, a cathode ray tube (CRT), and the like.

The storage unit 14 stores data used to operate the display body 10. The storage unit 14 includes all known types of non-volatile memories known to semi-permanently store data. Examples of the non-volatile memories include an Electrically Erasable Programmable Read-Only Memory (EEPROM), a flash memory, a hard disk drive (HDD), and the like.

The instruction receiver, or receiving unit 16, receives a remote control signal transmitted from the remote control 20. A method of the receiving unit 16 receiving the remote control signal transmitted from the remote control 20 includes an infrared method, Bluetooth, Wi-Fi, and the like.

The controller 15 controls operations of the display body 10 overall. The controller 15 controls each component of the display body 10 based on input information of the user obtained from the remote control signal received from the remote control 20. The controller 15 may control the input unit 11 to receive a web page and/or an image signal desired by the user. The controller 15 may control the image processor 12 to perform image processing on a web page and/or image contents received by the input unit 11. The controller 15 may store data in the storage unit 14 or read data stored in the storage unit as needed for performance of control.

Although not shown, the controller 15 may include a non-volatile memory to store executable codes of computer programs corresponding to the performance of control; a volatile memory to which at least part of the executable codes stored in the non-volatile memory is loaded; and a microprocessor to perform an executable code loaded to the volatile memory.

Although not shown, the remote control 20 may include a touch pad and a key pad to detect input by the user, a remote control signal transmission unit to transmit a remote control signal corresponding to the detected input by the user, and a remote control controller to control the above components.

The display body 10 may further include other components (not shown) used for operations of the display apparatus 1. Examples of the components include an audio signal receiver to receive an audio signal, an audio signal processor to process an audio signal, an audio output unit to output an audio signal, an input pad unit provided in the display body 10 separately from the remote control 20 to receive input of an instruction of the user, and a power supply unit to provide power used to operate each component of the display body 10.

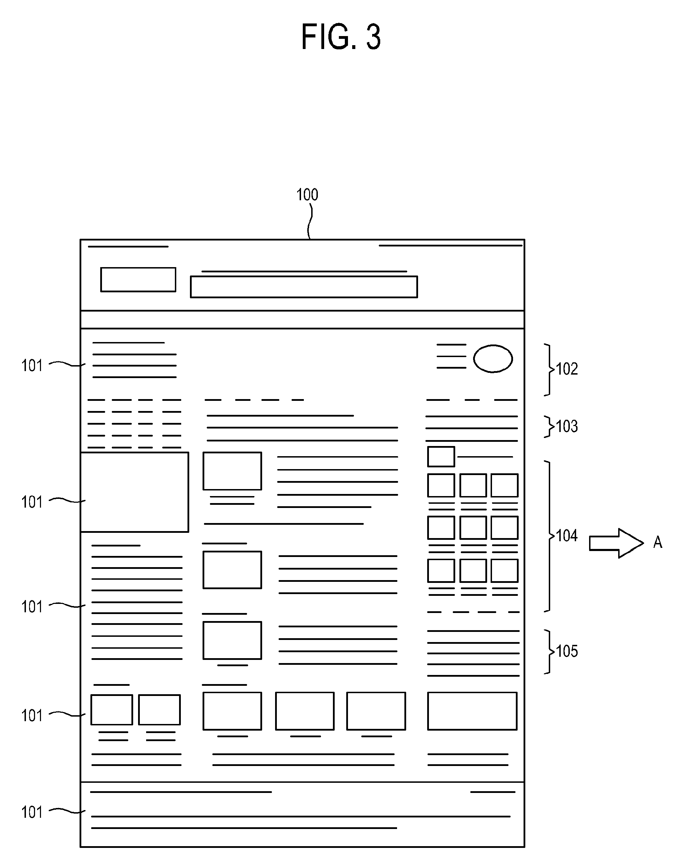

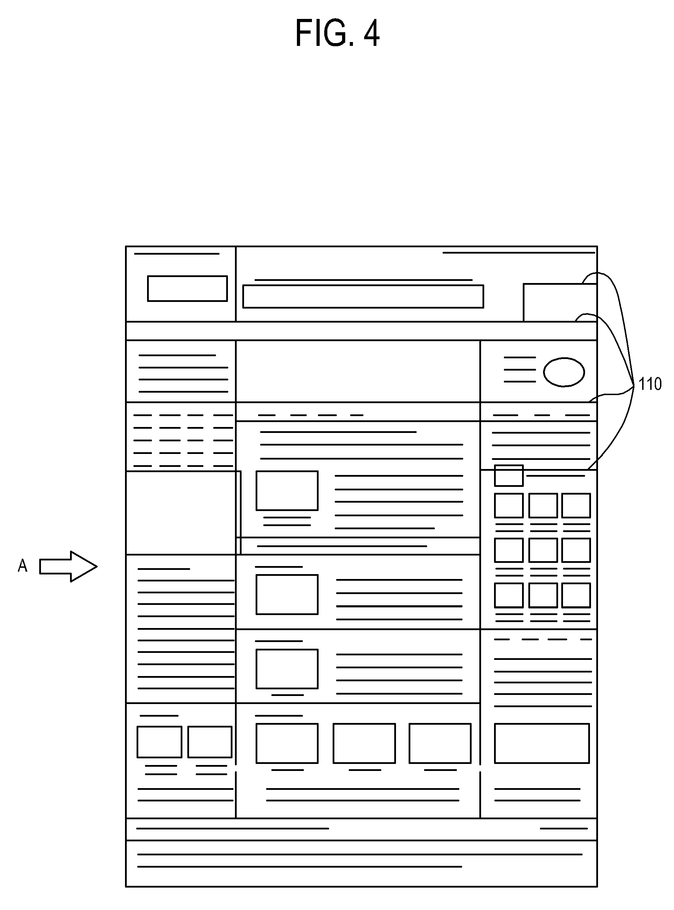

The display apparatus 1 shown in FIGS. 1 and 2 displays an input web page which is to be divided into a plurality of first blocks. FIG. 3 illustrates an example of a web page 100 having a plurality of first blocks 101 to 105, and FIG. 4 illustrates an example of the web page 100 divided into the plurality of first blocks 101 to 105 and displayed by the display apparatus 1. As shown in FIG. 3, each of the first blocks 101 to 105 of the web page 100 is a region of the web page 100 divided based on a visual, geometric, meaning, or logical standard. In FIGS. 3 and 4, contents of the first blocks 101 to 105, such as text, images, figures, and the like are simplified into lines, boxes, circles, or the like shown in the first blocks 101 to 105 for convenience.

As shown in FIG. 4, the display apparatus 1 may display at least one boundary 110 between the first blocks 101 to 105 so that the user identifies the web page 100 divided into the plurality of first blocks 101 to 105. Further, in one exemplary embodiment, the display apparatus 1 may focus on and display any one of the first blocks 101 to 105 on a screen of the display unit 13. That is, the display apparatus 1 may dispose any one of the first blocks 101 to 105 substantially in a center position of the screen of the display unit 13. In this exemplary embodiment, the web page 100 may be enlarged at a proper scale so that the user may identify contents of the web page 100. Further, any one of the first blocks 101 to 105 currently focused on may be highlighted. The display apparatus 1 changes a focus between the first blocks 101 to 105 based on user's manipulations using up, down, right, and left buttons of the remote control 20, browsing the web page 100. Accordingly, the user may browse the web page 100 conveniently and quickly.

The controller 15 of the display apparatus 1 analyzes the input web page 100 and divides the web page 100 into the plurality of first blocks 101 to 105. Various methods of dividing the web page 100 into the plurality of first blocks 101 to 105 may be used. For example, a method using a hierarchical structure of a web page, a dividing method based on images, and the like may be used, which are described below.

In the method using the hierarchical structure of the web page, a Document Object Model (DOM) tree of a web page 100 to be divided is obtained in a first process. Next, in a second process, blocks satisfying certain conditions are extracted by examining the DOM tree. Here, the extracted blocks may satisfy the following conditions:
(1) An extracted block does not have the same size as an already-added block (Redundancy eliminated).
(2) A block exists in a predetermined depth (a threshold to improve a speed may be set as an optional value within a range from 5 to 10; for example, 6).
(3) A width and a length of a hypertext mark-up language (HTML) tag are a predetermined value or more; for example, the width may be set as 120, and the length may be set as 30 in consideration of readability and a size of a screen.
(4) A block has a predetermined tag, for example, DIV, UL, LI, DL, DD, P, TD, Table, IFRAME, TR, FORM, DT, OL, or the like.
(5) A block having a depth of 2 or more does not get out of a region of a parental node.
(6) A block having a depth of 2 or more is in contact with a parental node at any one of up, down, right, and left sides.

Among the blocks obtained through the first and second processes, when a block which does not include a child block therein has a size of a predetermined value or more, the dividing method based on images is used to divide a corresponding region in a third process. An image-based dividing process is described as follows:
(1) A previous y-1 coordinate is compared in color with a current y coordinate through horizontal-line scanning with respect to each vertical line of an image, and accordingly a color difference of 5 or more becomes a reference line to divide a new block from a previous block.
(2) A previous x-1 coordinate is compared in color with a current x coordinate through vertical-line scanning with respect to each horizontal line of an image, and accordingly a color difference of 5 or more becomes a reference line to divide a new block from a previous block.
(3) In each of the above instances, a line is determined when a color is repeated successively more than a predetermined number of times during scanning.
(4) A color comparison value is represented as the greatest value selected among value differences with respect to each primary color of red, green and blue (R, G, and B).
(5) Finally, dividing is performed by recursive operations based on results of line scanning on all points in horizontal and vertical lines.
(6) A divided block which does not overlap with already extracted blocks is extracted.

Further, when a divided region is not good for viewing because a region is not the same in size as a block actually viewed by a user, or a white space is between blocks, coordinates of extracted blocks may be adjusted through the following process in a fourth process:
(1) When a distance between coordinates of neighboring blocks is smaller than a predetermined threshold, as for only compared coordinates, a child block has the same value as a previous block (the threshold may be set as 50 when x elements are compared with each other, and the threshold may be set as 30 when y elements are compared with each other).
(2) Coordinate comparison is performed on x and y coordinates of a left top of a block and on x and y coordinates of a right bottom of a block, and x coordinates are compared with x coordinates and y coordinates are compared with y coordinates regardless of a position of an element.

According to the above dividing process, any type of a web page may be divided into first blocks and browsed, and thus the web page may be quickly and conveniently browsed by viewing one of the blocks instead of the entire web page, thereby maintaining readability with respect to the contents of the web page. Further, the web page is divided into meaningful first blocks, so that an amount of content of the web page provided to the user may be adjusted.

The first blocks may have various sizes based on properties of the web page 100. When the first blocks are too large, for example, when the first blocks are larger than the screen of the display unit 13, the user may not be able to view all of the contents of the first blocks. Even though the web page 100 is already reduced in scale using the first blocks to resolve the aforementioned inconvenience, readability may still decrease. Here, the first blocks may be the result of too few divisions into first blocks which are too large, and which are not further divided by the method using the hierarchical structure.

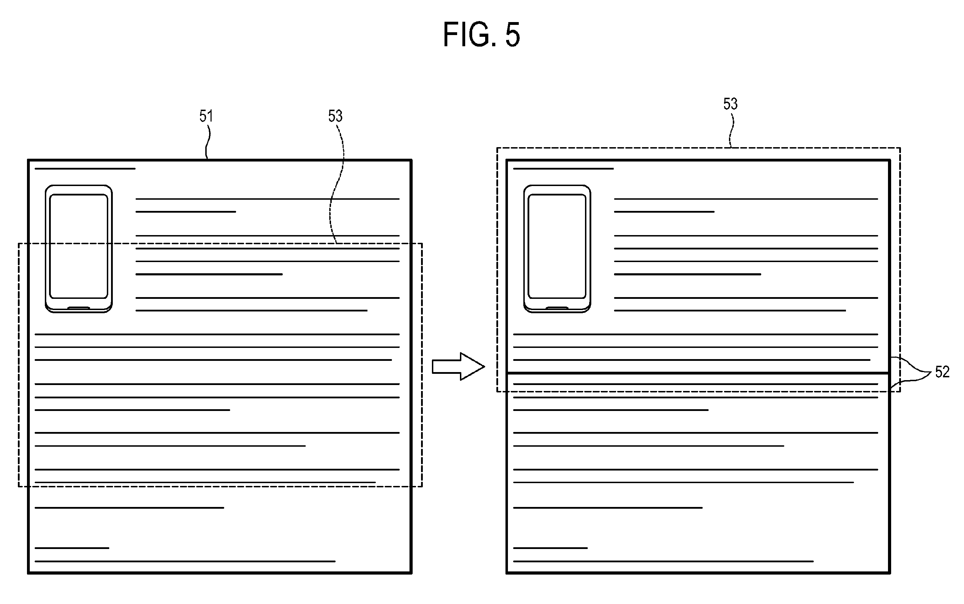

When the first blocks of the web page 100 are large, the controller 15 of the display apparatus 1 according to an exemplary embodiment may further divide each of the first blocks into a plurality of second blocks that have a size more suitable for the user to easily recognize contents of a corresponding first block. FIG. 5 illustrates an example of the plurality of second blocks 52. In FIG. 5, reference numeral 51 refers to a first block of the web page 100, and reference numeral 53 refers to the screen of the display unit 13. In this exemplary embodiment, is assumed that the first block 51 is larger than the screen 53 of the display unit 13 when the web page 100 is enlarged to a scale that is readable to the user. A size of the screen 53 of the display unit 13 is an illustrative example of a reference size to determine whether the first block 51 needs to be further divided. When the first block 51 is larger than the screen size 53, the controller 15 of the display apparatus 1 further divides the first block 51 into a plurality of second blocks 52 and displays one of the second blocks 52 to the user based on user's manipulations in the same manner as browsing the plurality of first blocks 101 to 105 described above. Like the first blocks 101 to 105, a boundary between the second blocks 52 may be displayed to be identified, and one of the second blocks 52 currently focused on may be disposed in a centre position of the screen 53 and highlighted.

As shown in FIG. 5, the first block 51 may be divided into two second blocks 52. In this exemplary embodiment, the first block 51 is divided horizontally into an upper block and a lower block, but is not limited thereto. The first block 51 may be divided vertically into right and left blocks. For example, when a length of the first block 51 is longer than a reference size, the first block 51 is divided horizontally into an upper block and a lower block. When a width of the first block 51 is longer than a reference size, the first block 51 is divided vertically into right and left blocks.

In dividing the second blocks 52, a number of second blocks 52 may be formed to be similar to a reference size. For example, the number of second blocks 52 may be determined so that each of the second blocks 52 has a smaller size than the reference size and has a size similar to the reference size.

In an exemplary embodiment, the first block 51 may be uniformly divided into second blocks 52. For example, the respective second blocks 52 may have substantially the same length. Alternatively, the first block 51 may not uniformly be divided into second blocks 52.

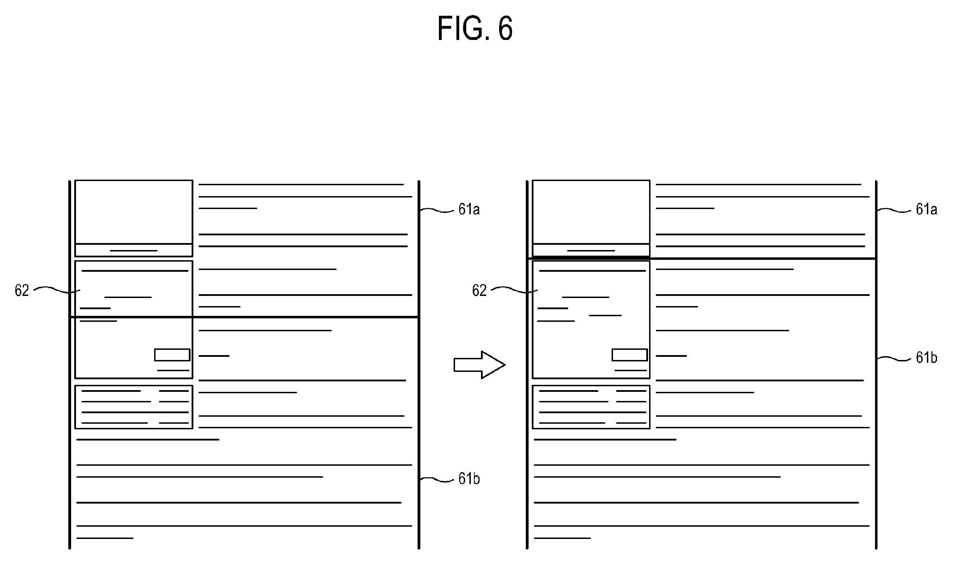

The first block 51 may be divided into second blocks 52 based on characteristics of the first block 51. FIG. 6 illustrates an example of dividing based on the characteristics of the first block 51. In FIG. 6, reference numeral 62 refers to an image included in the first block 51. The image 62 is an example of an object included in the first block 51. As shown in a left part of FIG. 6, when the first block 51 is divided into two second blocks 61a and 61 b, the boundary between the two second blocks 61a and 61b bisects the image 62, which would be problematic for a user trying to view the entire image 62. Thus, as shown in a right part of FIG. 6, the first block 51 may be divided into the two second blocks 61a and 61 b so as not to bisect the image 62 included in the first block 51. That is, dividing is performed so that a boundary between the two second blocks 61 a and 61 b does not bisect the image 62, and the image 62 is completely included in one second block 61 b.

According to the above method, the user may conveniently and quickly browse a web page.

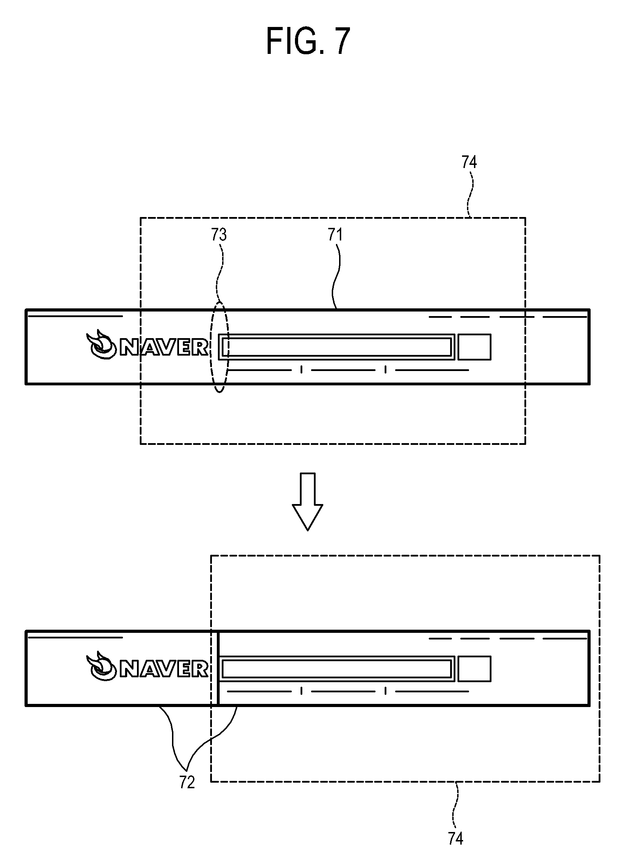

In one exemplary embodiment, the controller 15 of the display apparatus 1 may divide a first block into a plurality of second blocks based on an image. FIG. 7 illustrates an example of a plurality of second blocks 72 divided from a first block 71 based on an image. In FIG. 7, reference numeral 71 refers to the first block of the web page 100, and reference numeral 74 refers to the screen of the display unit 13. It is assumed that the first block 71 has a width longer than a reference size corresponding to the screen 74 of the display unit 13.

In this exemplary embodiment, the first block 71 may be divided based on a position 73 where characteristics of an image are continuous. For example, in a position represented by reference numeral 73, a color of one side of a box, which is contents of the first block 71, may be uniform in a lengthwise direction. When an extent of color uniformity meets or exceeds a predetermined threshold, the controller 15 determines that the characteristics of the image are continuous and divides the first block 71 into two second blocks 72 based on the position 73.

Dividing the first block in the aforementioned exemplary embodiment may be performed based on the following standards:
(1) When the first block has a width longer than a reference size, a position in the first block where image pixels having the same color are most continuously displayed in a lengthwise direction is determined as a position to be divided. The determined position is most likely to correspond to a portion of the image that is less significant to a user's understanding of the image - i.e. a background section, where the color would be constant across the length of the image.
(2) When the first block has a length longer than a reference size, a position in the first block where image pixels having the same color are most continuously displayed in a horizontal direction is determined as a position to be divided.
(3) When there are a plurality of positions having the same number of continuously displayed pixels, the position chosen should be that which would result in dividing the first block into the most uniform set of second blocks.

Based on the above standards, the first block is recursively divided until each of a plurality of second blocks has references sizes which do not exceed the size of the screen 74.

In one exemplary embodiment, when the first block is divided into a plurality of second blocks, the controller 15 may connect and store in the storage unit 14 a detailed block list of the second blocks with respect to a tag of a corresponding first block.

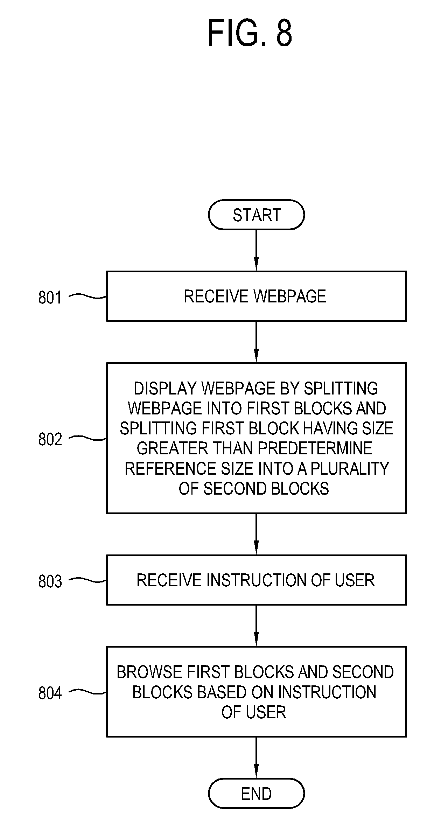

FIG. 8 is a flowchart illustrating a control method of the display apparatus 1 described with reference to FIGS. 1 to 7. In operation 801, the display apparatus 1 receives a web page selected by the user. In operation 802, the display apparatus 1 divides the web page into a plurality of first blocks and divides a first block larger than a predetermined reference size into a plurality of second blocks to display the web page showing the plurality of first blocks and second blocks.

In operation 803, the display apparatus 1 receives an instruction of the user on web browsing. In operation 804, the display apparatus 1 browses the first blocks and the second blocks that correspond to the instruction of the user.

Although a few exemplary embodiments have been shown and described, it will be appreciated by those skilled in the art that changes may be made in these exemplary embodiments without departing from the scope of the invention as defined in the appended claims. For example, the above exemplary embodiments are described with a TV as an illustrative example, but the display apparatus of the exemplary embodiments may be a smart phone, a mobile phone, and the like.

## Claims

1. A display apparatus comprising:
an input unit which receives a web page;
an image processor which processes the web page for display;
a display unit which displays the processed web page;
a receiving unit which receives an instruction of a user for browsing the web page; and
a controller which divides the web page into a plurality of first blocks to browse the web page by displaying at least one of the first blocks on the display unit, the plurality of first blocks having a size greater than a predetermined reference size.

2. The display apparatus of claim 1, wherein the controller divides at least one of the plurality of first blocks into a plurality of second blocks.

3. The display apparatus of claim 2, wherein the reference size corresponds to a size of a screen of the display unit.

4. The display apparatus of claim 2, wherein the controller uniformly divides the at least one first block into the plurality of second blocks.

5. The display apparatus of claim 2, wherein the controller determines a number of second blocks to divide the at least one first block into so that each of the second blocks has a similar size to the reference size.

6. The display apparatus of claim 2, wherein the controller divides at least one of the first blocks into the plurality of second blocks so that an object included in the at least one first block is not separated into two or more second blocks, but is completely included in one of the second blocks.

7. The display apparatus of claim 2, wherein the controller divides the at least one first block into the plurality of second blocks when at least one of a width and a length of the first block is greater than the reference size.

8. The display apparatus of claim 2, wherein the controller divides the at least one first block into the plurality of second blocks based on a position in the first block where an image characteristic is continuous.

9. A method of controlling a display apparatus comprising:
receiving a web page;
dividing the web page into a plurality of first blocks to display the first blocks, the plurality of first blocks having a size greater than a predetermined reference size;
receiving an instruction of a user for browsing the web page; and
browsing the first blocks based on the instruction of the user.

10. The method of claim 9, further comprising dividing at least one of the plurality of first blocks into a plurality of second blocks.

11. The method of claim 9, wherein the reference size corresponds to a size of a screen of the display apparatus.

12. The method of claim 10, further comprising uniformly dividing the at least one first block into the plurality of second blocks.

13. The method of claim 10, further comprising determining a number of second blocks to divide the at least one first block into so that each of the second blocks has a similar size to the reference size.

14. The method of claim 10, further comprising dividing at least one of the first blocks into the plurality of second blocks so that an object included in the at least one first block is not separated into two ore more second blocks, but is completely included in one of the second blocks.

15. The method of claim 10, further comprising dividing the at least one first block into the plurality of second blocks when at least one of a width and a length of the first block is greater than the reference size.
